# EUROPEAN PATENT SPECIFICATION

(11) **EP 4 481 222 B1**
(45) Date of publication and mention of the grant of the patent: **29.10.2025**
(21) Application number: 24183728.5
(22) Date of filing: 21.06.2024
(51) Int. Cl.: F16D 48/08

(54) **STRADDLED VEHICLE AND METHOD FOR CONTROLLING A STRADDLED VEHICLE**
GRÄTSCHSITZFAHRZEUG UND VERFAHREN ZUR STEUERUNG EINES GRÄTSCHSITZFAHRZEUGS
VÉHICULE À ENFOURCHER ET PROCÉDÉ DE COMMANDE D'UN VÉHICULE À ENFOURCHER

(30) Priority: 21.06.2023 JP 2023101961
(43) Date of publication of application: 25.12.2024
(73) Proprietor: Yamaha Hatsudoki Kabushiki Kaisha, Iwata-shi, Shizuoka 438-8501 (JP)
(72) Inventor: Kasai, Shinobu, Iwata-shi, Shizuoka, 438-8501 (JP); Minami, Kengo, Iwata-shi, Shizuoka, 438-8501 (JP)
(74) Representative: Grünecker Patent- und Rechtsanwälte PartG mbB

(56) References cited:
- EP-B1- 2 695 783
- US-A1- 2009 271 082
- US-B2- 7 476 179
- US-B2- 7 527 579

## Description

The present teaching relates to a straddled vehicle and a method for controlling a straddled vehicle.

JP 2007-225045 A, for example, discloses a straddled vehicle including an automatic clutch device. The automatic clutch device disclosed in JP 2007-225045 A includes an electric actuator and a hydraulic cylinder. The automatic clutch device uses the actuator to drive the hydraulic cylinder, thereby engaging or disengaging a friction clutch. Furthermore, JP 2007-225045 A discloses detecting hydraulic oil leakage as an abnormality based on a result of detection of a current value of the actuator.

A straddled vehicle controls the posture of a vehicle body thereof with a rider's weight shift while the straddled vehicle is traveling or making a turn. The straddled vehicle is therefore preferably downsized and lightweight so that the posture control can be performed efficiently with the rider's weight shift. The demand for downsizing extends to a clutch drive system of the straddled vehicle.

It is the object of the present teaching to provide a straddled vehicle which can reduce damage while achieving downsizing of a drive system for a clutch of the straddled vehicle. Closest prior art is US 7527579. Also US 7476179 and EP 2695783 are related prior art.

According to the present teaching said object is solved by a straddled vehicle having the features of independent claim 1. Moreover, according to the present teaching said object is solved by a method for controlling a straddled vehicle having the features of independent claim 6. Preferred embodiments are laid down in the dependent claims.

When the state of the clutch changes to an engaged state or to a disengaged state as a result of movement of a pressure plate of the clutch, reaction force resulting from a clutch spring is generated in the pressure plate. The magnitude of the reaction force that is generated in the pressure plate varies with the amount of deformation of the clutch spring, which in other words is the operating amount of the clutch. Moreover, when applying a link mechanism to transmission of force for operating the clutch. The link mechanism transmits, for example, rotation and force through swinging links that swing around two rotational axes, respectively, and a coupling link coupled to these two swinging links. The link mechanism has the property of being able to vary force being outputted, based on angles formed by the swinging links and the coupling link. Downsizing of a motor serving as a source of the force is achieved by applying properties of the force of the link mechanism to properties of the reaction force of the clutch.

In the case of the link mechanism, unlike the case of a hydraulic cylinder, which is filled with hydraulic oil to full capacity, replacement of the clutch, for example, entails adjustment of operating positions of the links. The operating positions in the link mechanism are adjusted, for example, through adjustment of the length of the coupling link.

However, in a situation where the adjustment of the length in maintenance at the time of replacement is inadequate or in a situation where the length is inadvertently changed by a user, for example, a portion of a moving component can hit another component that is not anticipated in the design before finishing the movement during operation of the clutch. Making constituent components and their supporting parts robust to reduce damage to the constituent components due to a portion of a component hitting another component leads to upsizing of the clutch and the drive system.

In order to prevent upsizing of a clutch and a drive system of a straddled vehicle, it can be considered to use a configuration in which inspection drive is performed to drive a clutch motor in a direction toward a movable limit position corresponding to a connection position or a disconnection position until rotation of the clutch motor is stopped, thereby causing a pressure plate to move through a link mechanism and an adjustment mechanism, before the straddled vehicle starts traveling. When considering a configuration in which the straddled vehicle is restricted from traveling if a positional signal read when the rotation of the clutch motor is stopped indicates a position outside a range corresponding to the movable limit position of the clutch. In a situation where the position where the rotation of the clutch motor is stopped does not agree with the movable limit position, it is likely that a portion of a component is hitting another component due to inadequate adjustment of the length of the link. In such a situation, the straddled vehicle is restricted from traveling. Then, the components are prevented from hitting each other during movement of the components when the straddled vehicle starts traveling or when the gear stage is changed. This configuration helps prevent the upsizing that can result from the goal to reduce damage to components. It is therefore possible to reduce damage to the clutch and the drive system of the straddled vehicle while achieving downsizing of the drive system for the clutch.

Regarding the above, a straddled vehicle according to an aspect of the present teaching has the following configuration.
(1) A straddled vehicle including:
   an engine;
   a transmission device having a plurality of gear stages;
   a clutch configured to disconnect and connect power transmission between the engine and the transmission device according to a position of a pressure plate that moves between a connection position and a disconnection position;
   a clutch motor:
      a rotary output shaft configured to output rotational force of the clutch motor;
      a potentiometer configured to output a positional signal indicating a rotational position of the rotary output shaft;
      a link mechanism configured to move the pressure plate by transmitting thereto the rotational force from the rotary output shaft, the link mechanism including a plurality of links coupled to each other and an adjustment mechanism configured to adjust a length of at least one of the plurality of links; and
      a control device configured to
         control the clutch motor to change a position of the pressure plate when the straddled vehicle starts traveling or when the gear stage is changed among the plurality of gear stages in the transmission device,
         perform inspection drive to drive the clutch motor in a direction toward a position corresponding to a movable limit position beyond the connection position in the clutch until rotation of the clutch motor is stopped, thereby causing the pressure plate to move through the link mechanism including the adjustment mechanism, after the straddled vehicle is turned on and before the straddled vehicle starts traveling, and
         restrict the straddled vehicle from traveling if the positional signal outputted from the potentiometer when the rotation of the clutch motor is stopped indicates a position outside a range corresponding to the movable limit position.

In the straddled vehicle described in (1), the clutch disconnects and connects power transmission between the engine and the transmission device according to the position of the pressure plate. The rotational force of the clutch motor is outputted through the rotary output shaft, transmitted by the link mechanism, and moves the pressure plate. The rotational force transmitted by the link mechanism varies depending on angles that the plurality of links form with respect to each other. Downsizing of the clutch motor serving as a source of the rotational force is achieved by applying properties of the rotational force transmitted by the link mechanism to properties of the reaction force of the pressure plate. The length of at least one of the plurality of links of the link mechanism is adjustable by the adjustment mechanism. Thus, the position of the pressure plate, which is moved by the rotational force transmitted by the link mechanism, can be adjusted in response to replacement or wear of the clutch.

In a situation where the adjustment of the length in the adjustment mechanism is inadequate, a portion of a moving component can hit another component during operation of the clutch. The control device of the straddled vehicle described in (1) causes the pressure plate to move through the link mechanism by driving the clutch motor until the rotation of the clutch motor is stopped, before the straddled vehicle starts traveling. The control device restricts the straddled vehicle from traveling if the positional signal outputted from the potentiometer when the rotation of the clutch motor is stopped indicates a position outside the range corresponding to the movable limit position. In a situation where the position of the rotary output shaft when the rotation of the clutch motor is stopped is outside the range corresponding to the movable limit position in the clutch, it is likely that a portion of a component is hitting another component due to inadequate adjustment of the length of the coupling link. In such a situation, the straddled vehicle is restricted from traveling. Then, the components are prevented from hitting each other due to the movement of the pressure plate when the straddled vehicle starts traveling or when the gear stage is changed. This configuration helps prevent the upsizing that can result from the goal to reduce damage to components. The movable limit position is located beyond the connection position where the clutch is engaged. That is, the connection position to which the clutch moves when the straddled vehicle starts traveling or when the gear stage is changed is determined with a margin of allowance relative to the movable limit position. This helps further reduce the possibility of components hitting each other due to the movement of the pressure plate when the straddled vehicle starts traveling or when the gear stage is changed. It is therefore possible to reduce damage while achieving downsizing of the drive system for the clutch of the straddled vehicle.

According to an aspect of the present teaching, the straddled vehicle may adopt the following configuration.

(2) The straddled vehicle described in (1), wherein
the control device drives the clutch motor to a position corresponding to the connection position in the clutch when the straddled vehicle is turned off, and omits the inspection drive if the positional signal from the potentiometer indicates a position within a range corresponding to the connection position in the clutch after the straddled vehicle is turned on and before the inspection drive is performed.

If the clutch in the straddled vehicle described in (2) is in the connection position after the straddled vehicle is turned on and before the inspection drive is performed, it is highly likely that the clutch moved to the connection position without abnormality the last time the straddled vehicle was turned off. It is also highly likely that the clutch was not replaced before the straddled vehicle is turned on. In this case, the subsequent movement of the clutch to the connection position is unlikely to cause damage to an actuator therein. In this case, the inspection drive is omitted, so that damage to components due to the inspection drive can be reduced, and the straddled vehicle can start traveling within a short period of time after being turned on.

According to an aspect of the present teaching, the straddled vehicle may adopt the following configuration.

(3) The straddled vehicle described in (1) or (2), wherein
in the inspection drive, the control device drives the clutch motor to move in the direction toward the position corresponding to the movable limit position at a lower speed than a speed at which the clutch motor moves in the direction toward the position corresponding to the connection position when the gear stage is changed.

The straddled vehicle described in (3) allows for a reduction in the possibility of damage due to the inspection drive. It is therefore possible to reduce damage while achieving downsizing of the drive system for the clutch of the straddled vehicle.

According to an aspect of the present teaching, the straddled vehicle may adopt the following configuration.

(4) The straddled vehicle described in any one of (1) to (3), wherein
after the inspection drive of the clutch motor, which is performed after the straddled vehicle is turned on and before the engine is started, the control device restricts the engine from starting if the positional signal outputted from the potentiometer when the rotation of the clutch motor is stopped indicates a position outside the range corresponding to the movable limit position.

In the straddled vehicle described in (4), a situation where the movement of the pressure plate can cause a component to hit another component is detected before the engine is started. In this case, an abnormal situation can be detected earlier after the straddled vehicle is turned on than, for example, in a case where the inspection drive is performed after the engine is started with the transmission device in a neutral state.

According to an aspect of the present teaching, the straddled vehicle may adopt the following configuration.

(5) The straddled vehicle described in any one of (1) to (4), wherein
the control device detects that the rotation has been stopped based on an increase in current being supplied to the clutch motor, a decrease in amount of change in the positional signal from the potentiometer, or a deviation of the positional signal from the potentiometer from a control target angle for the clutch motor.

In the straddled vehicle described in (5), it is possible to detect when the rotation is stopped without a dedicated detection device that detects when the rotation is stopped. It is therefore possible to reduce damage while achieving downsizing of the drive system for the clutch of the straddled vehicle.

The straddled vehicle refers to a vehicle of which a driver straddles a saddle thereof to sit thereon. The straddled vehicle has wheels. Examples of straddled vehicles include motorcycles. Alternatively, any vehicle such as a motor tricycle or an ATV (All-Terrain Vehicle). The motor tricycle may include two front wheels and one rear wheel, or may include one front wheel and two rear wheels. The straddled vehicle is, for example, a leaning vehicle configured to be able to turn in a leaning posture. The leaning vehicle is configured to turn in a posture leaning toward the center of a curve. By doing this, the leaning vehicle counteracts centrifugal force acting on the leaning vehicle during the turn. It is important for the leaning vehicle to be responsive to manipulation, and therefore further downsizing and weight reduction are desired.

The engine is an internal combustion engine. The engine outputs driving force that drives the wheels. The engine encompasses single-cylinder engines and engines having two or more cylinders. The engine has a crankshaft and outputs driving force produced through combustion as torque and rotation speed of the crankshaft.

The transmission device is a multi-speed transmission device having a plurality of gear stages. The transmission is gear-driven. The transmission device changes gear stages based on a rider's manipulation. The transmission device is, for example, an electric transmission device. Driving by an electric actuator changes gear stages in the electric transmission device.

The clutch is a friction clutch. The clutch includes a pressure plate that moves between a connection position and a disconnection position. The connection position is where the clutch transmits power between the engine and the transmission device without slipping. The pressure plate can move beyond the connection position to its movable limit position.

The clutch motor is an electric motor. The rotary output shaft outputs rotational force of the clutch motor. The rotary output shaft is, for example, connected to a rotary shaft of the electric motor through a gear. In a configuration in which the rotary output shaft is connected to the rotary shaft of the electric motor through a reduction gear, it is possible to output force (torque) for moving the pressure plate from the rotary output shaft using a small-sized motor. No particular limitations are placed on the reduction ratio between the clutch motor and the rotary output shaft, and the rotary output shaft may be, for example, the rotary shaft of the electric motor.

The potentiometer outputs a positional signal indicating the rotational position of the rotary output shaft. The potentiometer is, for example, a non-contact-type sensor. Alternatively, the potentiometer may be of contact type. The potentiometer is, for example, attached to the rotary output shaft. Alternatively, the potentiometer may be attached to the clutch motor or a gear connected to the rotary output shaft, and may output a positional signal indirectly indicating the rotational position of the rotary output shaft.

The link mechanism includes a plurality of links. Each of the plurality of links is rotatably coupled to its adjacent link via a joint.

The adjustment mechanism adjusts, for example, the length of a coupling link. Alternatively, the adjustment mechanism may adjust the length of a swinging link. However, a configuration in which the adjustment mechanism adjusts the length of the coupling link makes it possible to efficiently adjust the relationship between the input shaft and the output shaft without changing the swing radius of the swinging links.

The control device controls the clutch motor. The control device controls, for example, the clutch motor and the engine. In this case, a part that controls the clutch motor and a part that controls the engine may be separated from each other and located in different positions in the straddled vehicle. Alternatively, the part that controls the clutch motor and the part that controls the engine may be formed as a single unit. The control device changes, for example, the position of the pressure plate from the connection state to the disconnection state when the straddled vehicle starts traveling. The control device also changes, for example, the position of the pressure plate from the connection state to the disconnection state, and then from the disconnection state to the connection state when the gear stage is changed in the transmission device.

To turn on the straddled vehicle means, for example, to supply electric power to the control device by manipulating, and thus turning on a main switch of the straddled vehicle.

The terminology used herein is for defining particular embodiments only and is not intended to be limiting the teaching. The term "and/or" used herein includes any and all combinations of one or more of the associated listed items. The terms "including", "comprising", or "having", and variations thereof used herein specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both of direct and indirect attachment, connection, and coupling. In addition, the terms "connected" and "coupled" are not restricted to physical or mechanical connection or coupling, and can include direct or indirect electrical connection or coupling. Unless otherwise defined, all terms (including technical and scientific terms) used herein have the same meaning as commonly understood by one of ordinary skill in the art to which the present teaching belongs. It will be understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion.

This description describes a novel straddled vehicle. In the description given below, for the purposes of explanation, numerous specific details are set forth in order to provide a thorough understanding of the present teaching. It will be apparent, however, that those skilled in the art may practice the present teaching without these specific details. Advantageous Effects of Invention

According to the present teaching, it is possible to reduce damage while achieving downsizing of a drive system for a clutch of a straddled vehicle.

### Brief Description of Drawings

FIG. 1 is a diagram schematically illustrating a straddled vehicle according to a first embodiment. Part (A) is a side view of the straddled vehicle, Part (B) is a diagram schematically illustrating an electric clutch system of the straddled vehicle, and Part (C) is a timing chart for describing a clutch control operation.
FIG. 2 is a flowchart for describing an operation of a control device.
FIG. 3 is a diagram illustrating an operating state in a case where an adjustment mechanism is in an abnormal state.
FIG. 4 is a flowchart for describing an operation of a control device in a straddled vehicle according to a second embodiment.
FIG. 5 is a timing chart for describing a clutch control operation to be performed by a control device in a straddled vehicle according to a third embodiment.

### Description of Embodiments

The following describes straddled vehicles according to embodiments of the present teaching with reference to the drawings. It should be noted that the embodiments described below are merely examples.

### [First Embodiment]

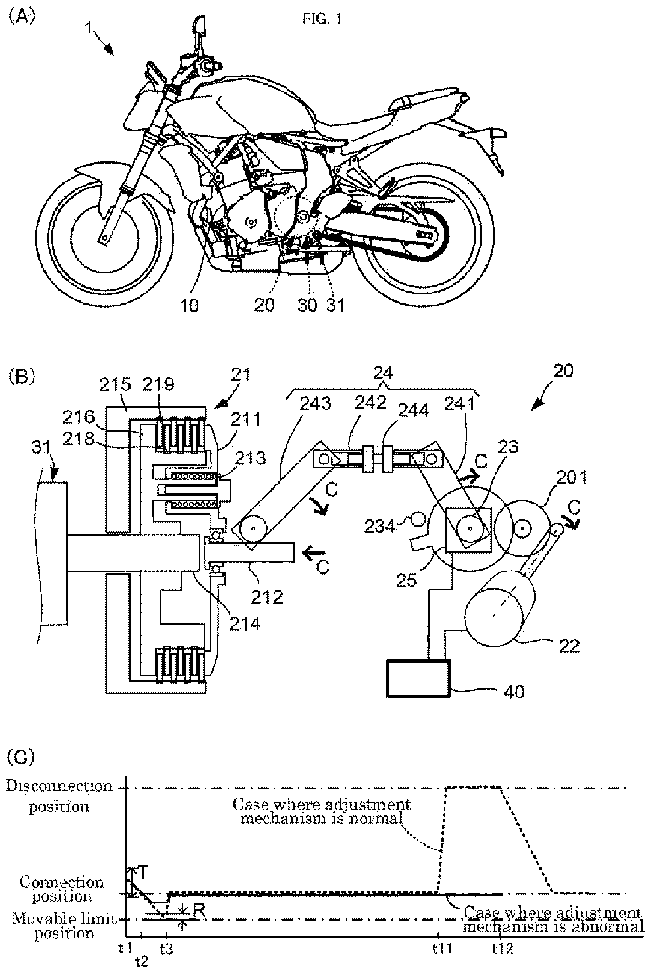

FIG. 1 is a diagram schematically illustrating a straddled vehicle according to a first embodiment. Part (A) of FIG. 1 is a side view of the straddled vehicle. Part (B) is a diagram schematically illustrating an electric clutch system of the straddled vehicle. Part (C) is a timing chart for describing a clutch control operation.

A straddled vehicle 1 shown in Part (A) of FIG. 1 includes an engine 10, a clutch system 20, a transmission system 30, and a control device 40.

As shown in Part (B) of FIG. 1, the clutch system 20 includes a clutch 21, a clutch motor 22, a rotary output shaft 23, a potentiometer 25, and a link mechanism 24. The transmission system 30 includes a transmission device 31 and a shift motor, not shown. That is, the straddled vehicle 1 includes the engine 10, the transmission device 31, the clutch 21, the clutch motor 22, the rotary output shaft 23, the potentiometer 25, the link mechanism 24, and the control device 40. The clutch motor 22, the rotary output shaft 23, the link mechanism 24, and the potentiometer 25 form a clutch drive system that drives the clutch 21.

The transmission device 31 has a plurality of gear stages. The plurality of gear stages each have a different preset transmission gear ratio. The transmission gear ratio refers to a ratio between input shaft rotation speed and output shaft rotation speed of the transmission device 31. The transmission gear ratio in the transmission device 31 changes discontinuously with gear stage change.

The straddled vehicle 1 has an electrically-driven gear shifting function. The straddled vehicle 1 has, for example, a semi-automatic gear shifting function of changing gear stages based on a rider's manipulation of a shift switch. Alternatively, the straddled vehicle 1 may have, for example, an automatic gear shifting function of changing gear stages according to the rotation speed of the engine 10 or the rotation speed of a member that rotates in conjunction with the engine 10. The clutch system 20 operates in synchronization with gear stage change in the transmission system 30.

The clutch 21 is a multiplate clutch. The clutch 21 includes a pressure plate 211. The clutch 21 disconnects and connects power transmission between the engine 10 and the transmission device 31 according to the position of the pressure plate 211, which moves between a connection position and a disconnection position.

More specifically, the clutch 21 further includes a plate shaft 212, a clutch spring 213, a main shaft 214, a clutch housing 215, a clutch boss 216, a friction plate 218, and a clutch plate 219. Power from the engine 10 is transmitted to the clutch housing 215. The friction plate 218 is attached to the clutch housing 215. The clutch boss 216 is fixed to the main shaft 214. The main shaft 214 functions as the input shaft of the transmission device 31. The main shaft 214 transmits the power to the transmission device 31. The clutch plate 219 is attached to the clutch boss 216.

The clutch 21 disconnects and connects the power transmission between the engine 10 and the transmission device 31 according to the position of pressure plate 211. The pressure plate 211 moves between the connection position and the disconnection position. Thus, the clutch 21 switches between an engaged state and a disengaged state.

The pressure plate 211 is urged toward the connection position by reaction force of the clutch spring 213. The pressure plate 211 moves to the connection position, so that the friction plate 218 and the clutch plate 219 are pressed. As a result, driving force of the engine 10 is transmitted to the transmission device 31 through friction force between the friction plate 218 and the clutch plate 219. The pressure plate 211 moves to the disconnection position, so that the friction force between the friction plate 218 and the clutch plate 219 decreases. This disconnects the transmission of the driving force of the engine 10 to the transmission device 31. At the same time, the amount of elastic deformation of the clutch spring 213 increases. The pressure plate 211 can move to a movable limit position beyond the connection position when moving in a direction from the disconnection position to the connection position. In other words, the connection position of the pressure plate 211 is located between the movable limit position and the disconnection position.

The clutch motor 22 moves the pressure plate 211 in accordance with control by the control device 40. The clutch motor 22 drives the pressure plate 211 without using hydraulic pressure.

The control device 40 operates the clutch 21 and the transmission device 31 by controlling the clutch motor 22 and the shift motor, not shown. The control device 40 is a separate device from a device that controls the operation of the engine 10. However, the control device 40 is not limited as such and may have, for example, the function of controlling the operation of the engine 10.

The rotary output shaft 23 outputs rotational force of the clutch motor 22. In the example shown in FIG. 1, the rotary output shaft 23 is connected to the clutch motor 22 with a gear 201 therebetween. Alternatively, the rotary output shaft 23 may be, for example, directly connected to the clutch motor 22.

The potentiometer 25 outputs a positional signal indicating the rotational position of the rotary output shaft 23. The positional signal outputted from the potentiometer 25 indirectly indicates the rotational position of the clutch motor 22. The positional signal outputted from the potentiometer 25 also indirectly indicates the position of the pressure plate 211.

It should be noted that the potentiometer 25 is provided on the rotary output shaft 23 in the example shown in FIG. 1. Alternatively, the potentiometer 25 may be, for example, provided on the clutch motor 22.

The link mechanism 24 includes a plurality of links 241, 242, and 243, and an adjustment mechanism 244. The plurality of links 241, 242, and 243 are coupled to each other. More specifically, the links 241, 242, and 243 are rotatably connected to each other in sequence. The link mechanism is a four-bar link mechanism. The links 241 and 243 are equivalent to swinging links. The link 242 is equivalent to a coupling link coupled to the swinging links. The link 241 is fixed to the rotary output shaft 23 and rotates with the rotary output shaft 23. The link 243 is connected to the plate shaft 212 through a rack-and-pinion mechanism. The plate shaft 212 rotatably supports the pressure plate 211 and moves with the pressure plate 211 between the connection position and the disconnection position. This puts the clutch 21 into the engaged state or the disengaged state.

The clutch motor 22 can move the pressure plate 211 to the movable limit position beyond the connection position as long as the adjustment mechanism 244 is adequately adjusted. The movable limit position is where the clutch motor 22 reaches its rotatable limit. The pressure plate 211 is moved to the movable limit position for the purpose of inspection. A restricting member 234 is configured to stop the rotation of the clutch motor 22. The movable limit position is where the rotation of the clutch motor 22 is stopped by the restricting member 234.

In the example shown in FIG. 1, the restricting member 234 is configured to stop the movement of the rotary output shaft 23. Alternatively, the restricting member 234 may be, for example, configured to stop the movement of the clutch motor 22 or another member such as the link 241, 242, or 243.

The restricting member 234 and the potentiometer 25 may be located further upstream than the clutch 21 with respect to a direction of transmission of the force that drives the clutch motor 22. In this case, the clutch 21 is not provided with the restricting member 234 or the potentiometer 25. This configuration makes it easy to connect a clutch lever via a mechanical wire or a hydraulic transmission part instead of the drive mechanism of the pressure plate 211 such as the clutch motor 22 and the link mechanism 24. That is, this configuration makes it possible to easily design and manufacture both a vehicle of the type including an electric clutch and a vehicle of the type including a clutch lever. Thus, a high level of flexibility in making variations to the straddled vehicle 1 is achieved.

The rotational force of the clutch motor 22 is outputted from the rotary output shaft 23, transmitted by the link mechanism 24, and moves the pressure plate 211. The link mechanism 24 moves the pressure plate 211 by transmitting thereto the rotational force of the rotary output shaft 23. Arrows C in FIG. 1 indicate directions of rotation or movement of respective components for the clutch 21 to be in the engaged state.

The rotational force transmitted by the link mechanism 24 varies depending on angles that the links 241, 242, and 243 form with respect to each other. By contrast, reaction force resulting from elastic force of the clutch spring 213 is generated in the pressure plate 211 of the clutch 21. The reaction force that is generated in the pressure plate 211 varies with the operating amount of the pressure plate 211, which in other words is the amount of elastic deformation of the clutch spring 213.

In the clutch system 20, the link mechanism 24 is employed as a rotational force transmission path. Thus, properties of the rotational force transmitted by the link mechanism 24 can be applied to properties of the reaction force of the pressure plate 211. This configuration allows the maximum rotational force required of the clutch motor 22 to be smaller than in a configuration in which the link mechanism 24 is not used. This configuration therefore makes it possible to achieve downsizing of the clutch motor 22. Consequently, downsizing of the rotary output shaft 23 or the link mechanism 24 that transmits the rotational force is also achieved.

The adjustment mechanism 244 adjusts the length of at least one of the plurality of links 241, 242, and 243. In the example shown in FIG. 1, the adjustment mechanism 244 adjusts the length of the link 242. In the example shown in FIG. 1, the adjustment mechanism 244 adjusts the length of the link 242 using a threading mechanism. Alternatively, the adjustment can be made by replacing members or by adopting a clamping mechanism.

The length of the link 242 can be adjusted using the adjustment mechanism 244. Thus, the position of the pressure plate 211 corresponding to an operation target of the clutch motor 22 can be adjusted when the clutch 21 is replaced, for example.

The adjustment with the adjustment mechanism 244 is usually performed during manufacture or assembly of the straddled vehicle 1 by a manufacturer, or during replacement or maintenance of the clutch 21 by a dealer. In the adjustment, for example, the rotary output shaft 23 is fixed in a predetermined adjustment position with a position fixing pin attached thereto. Then, with the rotary output shaft 23 fixed, the length of the adjustment mechanism 244 is adjusted so that the pressure plate 211 is in a reference position.

The control device 40 controls the clutch motor 22 to change the position of the pressure plate 211 when the straddled vehicle 1 starts traveling or when the gear stage is changed among the plurality of gear stages in the transmission device 31. The control device 40 also inspects whether or not the adjustment mechanism 244 is in a normal state.

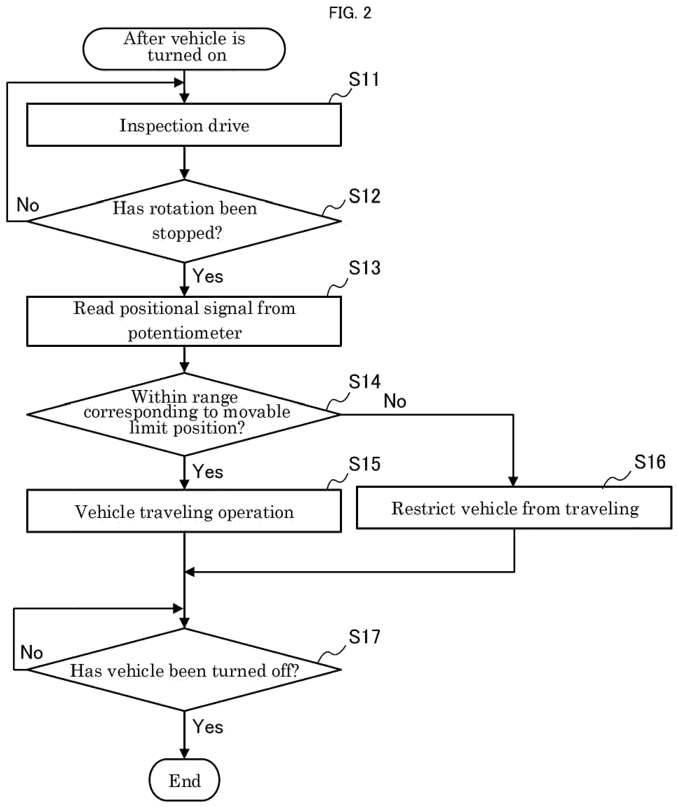

FIG. 2 is a flowchart for describing an operation of the control device.

The following describes the operation with reference to the chart shown in Part (C) of FIG. 1 as well as the flowchart.

First, the control device 40 inspects the state of the adjustment mechanism 244. More specifically, the control device 40 performs inspection drive after the straddled vehicle 1 is turned on and before the straddled vehicle 1 starts traveling (S11). The straddled vehicle 1 is turned on, for example, in accordance with manipulation of a main switch, not shown.

In the inspection drive, the control device 40 drives the clutch motor 22 in a direction toward a position corresponding to the movable limit position. The movable limit position is where the clutch motor 22 reaches its rotatable limit. More specifically, in the inspection drive, the control device 40 drives the clutch motor 22 by setting, as a control target angle, a position beyond the position corresponding to the movable limit position.

As shown in Part (C) of FIG. 1, at time t1 in the inspection drive, the control device 40 drives the clutch motor 22, so that the pressure plate 211 moves in the direction toward the movable limit position. The control device 40 controls the position and the rotation speed of the clutch motor 22 by sequentially supplying current to the clutch motor 22 in accordance with the control target angle. The pressure plate 211 moves by receiving the force of the clutch motor 22 through the link mechanism 24 including the adjustment mechanism 244.

The control device 40 inspects whether or not the rotation of the clutch motor 22 has been stopped (S12). For example, the control device 40 detects that the rotation has been stopped based on an increase in the current being supplied to the clutch motor 22. Alternatively, the control device 40 may detect that the rotation has been stopped based on a decrease in the amount of change in the positional signal from the potentiometer 25 or an increase in deviation of the positional signal from the potentiometer 25 (actual angle) from the control target angle. Alternatively, the control device 40 may perform, for example, the detection methods mentioned above in combination. For example, the control device 40 may perform both the detection based on the increase in current and the detection based on the deviation of the positional signal from the potentiometer 25 from the control target angle.

The control device 40 reads the positional signal from the potentiometer 25 (S13) when the rotation of the clutch motor 22 is stopped (Yes in S12).

If the positional signal from the potentiometer 25 indicates a position within a range R (Part (C) in FIG. 1) corresponding to the movable limit position (Yes in S14), the control device 40 executes a vehicle traveling operation (S15). It should be noted that an inspection other than that for the adjustment mechanism 244 may be performed after the inspection in Step S14 and before the vehicle traveling operation (S15).

In the vehicle traveling operation (S15), the control device 40 causes the clutch 21 and the transmission device 31 to operate in accordance with the rider's manipulation or the rotation speed of the engine 10. This allows the straddled vehicle 1 to travel.

More specifically, for example, in a case where the straddled vehicle 1 starts traveling in accordance with the rider's manipulation, the control device 40 puts the clutch 21 into the disengaged state. The control device 40 then changes the gear stage of the transmission device 31 from neutral to the first gear. Thereafter, the control device 40 puts the clutch 21 into the engaged state. More specifically, the control device 40 puts the clutch 21 into the engaged state after performing a half clutch control. When changing the gear stage, the control device 40 puts the clutch 21 into the disengaged state. The control device 40 then changes the gear stage of the transmission device 31. The control device 40 then puts the clutch 21 into the engaged state. When stopping the straddled vehicle 1, the control device 40 puts the clutch 21 into the disengaged state.

The control device 40 controls the clutch 21 and the transmission device 31 based on the state of a switch that receives the rider's manipulation. The control device 40 can also control the clutch 21 and the transmission device 31 based on the rotation speed of the engine 10 or the rotation speed of a member that rotates in conjunction with the rotation of the engine 10.

If the positional signal from the potentiometer 25 indicates a position outside the range R (Part (C) in FIG. 1) corresponding to the movable limit position in Step S14 (No in S14), the control device 40 restricts the straddled vehicle 1 from traveling (S16).

It should be noted that the inspection drive (S11) and the reading of the positional signal from the potentiometer 25 (S13) in the present embodiment may be performed in parallel with the starting of the engine 10. For example, in a case where the transmission device 31 is in a neutral state and the rider performs an engine start operation during the inspection drive (S11), the control device 40 starts the engine 10.

A dashed line in the chart shown in Part (C) of FIG. 1 indicates change in the positional signal from the potentiometer 25 after the straddled vehicle 1 is turned on in a case where the adjustment mechanism 244 is in the normal state. A solid line indicates change in the positional signal from the potentiometer 25 in a case where the adjustment mechanism 244 is in an abnormal state. The positional signal from the potentiometer 25 indirectly indicates the position of the pressure plate 211.

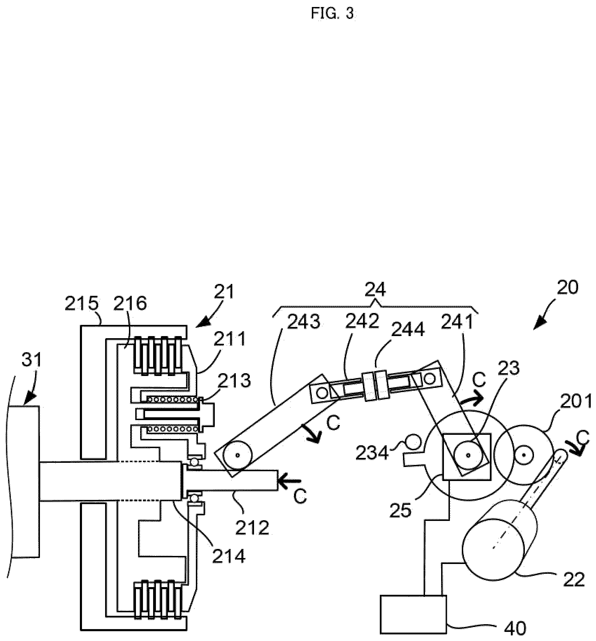

FIG. 3 is a diagram illustrating an operating state in a case where the adjustment mechanism is in the abnormal state.

After the straddled vehicle 1 is turned on at time t11 in the chart in Part (C) of FIG. 1, an inspection operation is executed. The dashed line in the chart also indicates the control position target for the clutch motor 22.

When the adjustment mechanism 244 is in the normal state, the clutch motor 22 follows the control position target as indicated by the dashed line. That is, when the adjustment mechanism 244 is in the normal state, the clutch motor 22 rotates beyond a position corresponding to the connection position in the clutch 21 to the position corresponding to the movable limit position as indicated by the dashed line. The clutch motor 22 comes to a halt, being stopped from rotating at the position corresponding to the movable limit position at time t3. That is, the rotation of the clutch motor 22 is stopped by the restricting member 234 at the position corresponding to the movable limit position. In other words, the pressure plate 211 moves to the movable limit position.

If the positional signal outputted from the potentiometer 25 when the rotation of the clutch motor 22 is stopped indicates a position within the range R corresponding to the movable limit position, such as a value at time t3, the control device 40 determines that the state of the adjustment mechanism 244 and the state of the rotary output shaft 23 are normal. In this case, the control device 40 allows the straddled vehicle 1 to travel. More specifically, if the positional signal indicates a position within the range R corresponding to the movable limit position, the control device 40 executes an operation for the travel of the straddled vehicle 1. For example, as indicated by the dashed line, the control device 40 starts the engine 10, and puts the clutch 21 into the disengaged state at time t11 in accordance with the rider's manipulation, changes the gear stage of the transmission device 31, and then puts the clutch 21 into the engaged state at time t12.

It should be noted that the control device 40 may perform an inspection other than the inspection of the adjustment mechanism 244 prior to the operation for the travel of the straddled vehicle 1.

If the adjustment mechanism 244 is not in the normal state, the clutch motor 22 is stopped from rotating at a position before the position corresponding to the movable limit position (time t2) as indicated by the solid line in Part (C) of FIG. 1. This could be caused, for example, by inadequate adjustment with the adjustment mechanism 244 in maintenance at the time of replacement. This could be caused also by the length of the adjustment mechanism 244 being inadvertently changed by the user.

In the example shown in FIG. 3, as a result of the clutch motor 22 rotating in a direction toward the position corresponding to the connection position, the plate shaft 212 hits the main shaft 214 before the rotation of the clutch motor 22 is stopped by the restricting member 234. This stops the rotation of the clutch motor 22.

As indicated by the solid line between time t2 and time t3 in Part (C) of FIG. 1, the clutch motor 22 is stopped from rotating at a position before the position corresponding to the movable limit position. Consequently, the positional signal outputted from the potentiometer 25 when the rotation of the clutch motor 22 is stopped indicates a position outside the range R corresponding to the movable limit. In this case, the control device 40 restricts the straddled vehicle 1 from traveling. For example, the control device 40 restricts the clutch 21 and the transmission device 31 from operating in spite of the rider's manipulation.

This prevents components such as the plate shaft 212 and the main shaft 214 from hitting each other because of the movement of the pressure plate 211 when the straddled vehicle 1 starts traveling or when the gear stage is changed. This prevents such components from getting damaged. For example, the clutch motor 22, the gear 201, and the rotary output shaft 23 are prevented from getting damaged.

According to the present embodiment, for example, if a position fixing pin attached in the adjustment performed during the replacement of the clutch 21 is left unremoved, the positional signal indicates a position outside the range R corresponding to the movable limit. The above-described configuration reduces damage due to the position fixing pin left unremoved. The above-described configuration therefore helps prevent the upsizing that can result from the goal to reduce damage to components.

### [Second Embodiment]

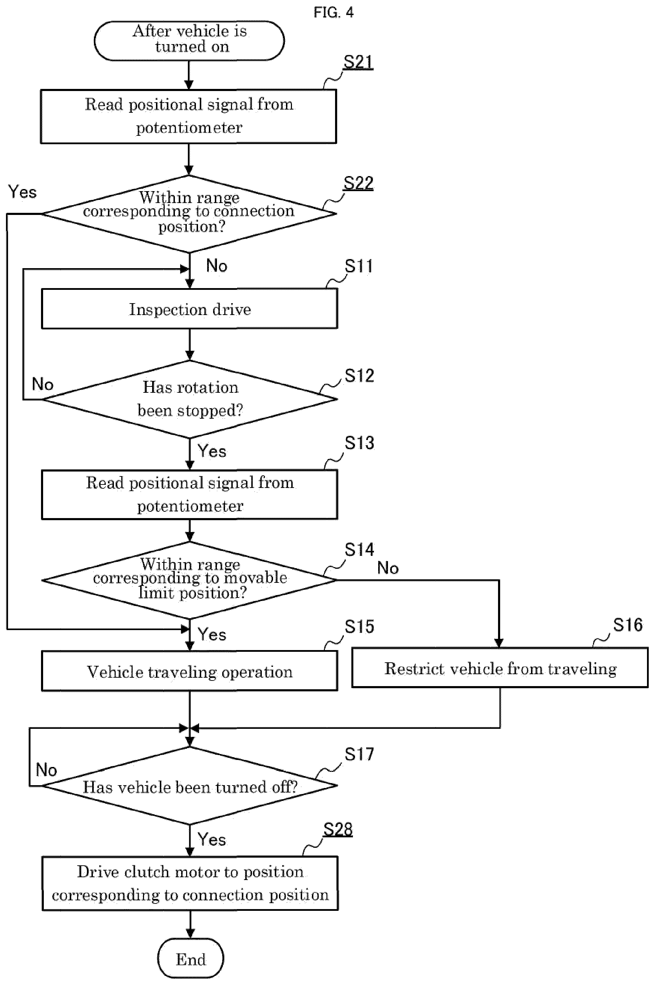

FIG. 4 is a flowchart for describing an operation of a control device in a straddled vehicle according to a second embodiment.

When the straddled vehicle is turned off (Yes in S17), the control device 40 according to the present embodiment drives the clutch motor 22 to the position corresponding to the connection position in the clutch 21 (S28). More specifically, for example, upon detecting that the rider's manipulation to turn off the straddled vehicle (Yes in S17), the control device 40 drives the clutch motor 22 to move to the position corresponding to the connection position in the clutch 21. Thereafter, power supply is cut off.

The control device 40 according to the present embodiment reads the positional signal from the potentiometer 25 (S21) after the straddled vehicle is turned on and before the inspection drive is performed (S11). If the positional signal indicates a position within a range (range T in Part (C) of FIG. 1) corresponding to the connection position in the clutch 21 (Yes in S22), the control device 40 omits the inspection drive (S11).

If the clutch 21 is in the connection position after the straddled vehicle is turned on and before the inspection drive is performed, it is highly likely that the clutch 21 moved to the connection position without abnormality the last time the straddled vehicle was turned off. This also suggests that it is highly likely that the clutch 21 was not replaced. In this case, the inspection drive (S11) is omitted, so that damage to components due to the inspection drive can be reduced, and the straddled vehicle can start traveling within a short period of time after being turned on.

Other than those described above, the present embodiment has the same elements of configuration and operation as the first embodiment. Accordingly, the elements of configuration corresponding to those in the first embodiment are labelled using the same reference signs as in the first embodiment, and illustration and description thereof are omitted.

### [Third Embodiment]

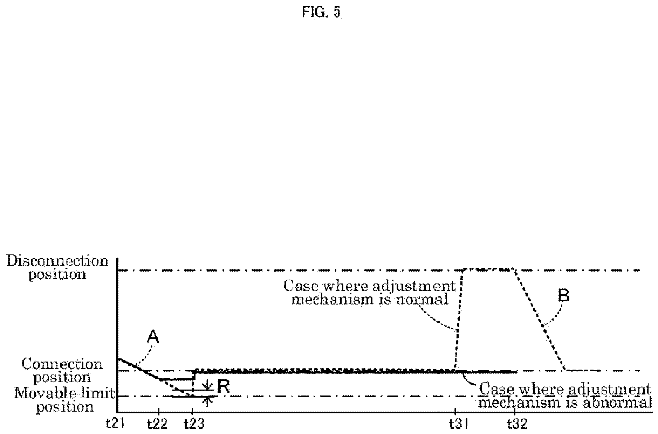

FIG. 5 is a timing chart for describing a clutch control operation to be performed by a control device in a straddled vehicle according to a third embodiment.

In the inspection drive (S11 in FIG. 2), the control device 40 according to the present embodiment drives the clutch motor 22 to move in the direction toward the position corresponding to the movable limit position at a lower speed than the speed at which the clutch motor 22 moves in the direction toward the position corresponding to the connection position when the gear stage is changed.

A gradient A of a dashed line starting at t21 in the chart in FIG. 5 represents the speed of the movement of the clutch motor 22 in the direction toward the position corresponding to the movable limit position in the inspection drive. A gradient B of a dashed line starting at t32 represents the speed of the movement of the clutch motor 22 in the direction toward the position corresponding to the connection position when the gear stage is changed. The speed of the movement (gradient A) of the clutch motor 22 in the direction toward the position corresponding to the movable limit position in the inspection drive is lower than the speed of the movement (gradient B) of the clutch motor 22 in the direction toward the position corresponding to the connection position when the gear stage is changed.

The straddled vehicle 1 according to the present embodiment allows for a reduction in the possibility of damage due to the inspection drive. It is therefore possible to further reduce damage while achieving downsizing of the drive system for the clutch 21.

Other than those described above, the present embodiment has the same elements of configuration and operation as the first embodiment. Accordingly, the elements of configuration are labelled using the same reference signs as in the first embodiment, and description thereof is omitted.

### [Fourth Embodiment]

The control device 40 according to the present embodiment restricts the engine 10 from starting if the adjustment with the adjustment mechanism 244 is inadequate.

Referring to the flowchart in FIG. 2, after the straddled vehicle is turned on, the control device 40 according to the present embodiment restricts the engine 10 from starting until the vehicle traveling operation (S15).

Furthermore, after the inspection drive of the clutch motor 22 (S11), the control device 40 restricts the straddled vehicle 1 from traveling (S16) if the positional signal outputted from the potentiometer 25 when the rotation is stopped indicates a position outside the range R corresponding to the movable limit position (No in S14). The control device 40 restricts the engine 10 from starting in Step S16.

In the case of the present embodiment, an abnormal situation can be detected earlier after the straddled vehicle is turned on than, for example, in a case where the inspection drive (S11) is performed after the engine 10 is started in neutral.

Other than those described above, the present embodiment has the same elements of configuration and operation as the first embodiment. Accordingly, the elements of configuration are labelled using the same reference signs as in the first embodiment, and description thereof is omitted.

The features of the embodiments described above may be combined as appropriate. For example, the third embodiment, in which the clutch motor 22 moves at a lower speed in the inspection drive, may be combined with the second embodiment, which is related to the omission of the inspection drive. The fourth embodiment, which restricts starting of the engine 10, may be combined with the second embodiment, which is related to the omission of the inspection drive. Furthermore, all of the second embodiment, the third embodiment, and the fourth embodiment may be combined.

### Reference Signs List

- 1: straddled vehicle
- 10: engine
- 21: clutch
- 22: clutch motor
- 23: rotary output shaft
- 24: link mechanism
- 25: potentiometer
- 31: transmission device
- 40: control device
- 211: pressure plate
- 241, 242, 243: link
- 244: adjustment mechanism

## Claims

1. A straddled vehicle (1) comprising:
an engine (10);
a transmission device (31) having a plurality of gear stages;
a clutch (21) configured to disconnect and connect power transmission between the engine (10) and the transmission device (31) according to a position of a pressure plate (211) that is configured to move between a connection position and a disconnection position;
a clutch motor (22);
a rotary output shaft (23) configured to output rotational force of the clutch motor (22);
a potentiometer (25) configured to output a positional signal indicating a rotational position of the rotary output shaft (23);
a link mechanism (24) configured to move the pressure plate (211) by transmitting thereto the rotational force from the rotary output shaft (23), the link mechanism (24) including a plurality of links (241, 242, 243) coupled to each other and an adjustment mechanism (244) configured to adjust a length of at least one (242) of the plurality of links (241, 242, 243); and
a control device (40) configured to
control the clutch motor (22) to change a position of the pressure plate (211) when the straddled vehicle (1) starts traveling or when the gear stage is changed among the plurality of gear stages in the transmission device (31),
perform inspection drive to drive the clutch motor (22) in a direction toward a position corresponding to a movable limit position beyond the connection position in the clutch (21) until rotation of the clutch motor (22) is stopped, thereby causing the pressure plate (211) to move through the link mechanism (24) including the adjustment mechanism (244), after the straddled vehicle (1) is turned on and before the straddled vehicle (1) starts traveling, and **characterised in that** the control device is further configured to restrict the straddled vehicle (1) from traveling if the positional signal outputted from the potentiometer (25) when the rotation of the clutch motor (22) is stopped indicates a position outside a range corresponding to the movable limit position.

2. The straddled vehicle (1) according to claim 1, wherein the control device (40) is configured to drive the clutch motor (22) to a position corresponding to the connection position in the clutch (21) when the straddled vehicle (1) is turned off, and configured to omit the inspection drive if the positional signal from the potentiometer (25) indicates a position within a range corresponding to the connection position in the clutch (21) after the straddled vehicle (1) is turned on and before the inspection drive is performed.

3. The straddled vehicle (1) according to claim 1 or 2, wherein the control device (40) is configured to drive the clutch motor (22) to move in the direction toward the position corresponding to the movable limit position at a lower speed in the inspection drive than a speed at which the control device (40) is configured to drive the clutch motor (22) in the direction toward the position corresponding to the connection position when the gear stage is changed.

4. The straddled vehicle (1) according to any one of claims 1 to 3, wherein the control device (40) is configured to restrict the engine (10) from starting if the positional signal outputted from the potentiometer (25) when the rotation of the clutch motor (22) is stopped indicates a position outside the range corresponding to the movable limit position, after the inspection drive of the clutch motor (22), which is performed after the straddled vehicle (1) is turned on and before the engine (10) is started.

5. The straddled vehicle (1) according to any one of claims 1 to 4, wherein the control device (40) is configured to detect that the rotation of the clutch motor (22) has been stopped based on an increase in current being supplied to the clutch motor (22), a decrease in amount of change in the positional signal from the potentiometer (25), or a deviation of the positional signal from the potentiometer (25) from a control target angle for the clutch motor (22).

6. A method for controlling a straddled vehicle (1) having an engine (10), a transmission device (31) having a plurality of gear stages, a clutch (21) configured to disconnect and connect power transmission between the engine (10) and the transmission device (31) according to a position of a pressure plate (211) that moves between a connection position and a disconnection position, a clutch motor (22), a rotary output shaft (23) configured to output rotational force of the clutch motor (22), a potentiometer (25) configured to output a positional signal indicating a rotational position of the rotary output shaft (23), and a link mechanism (24) configured to move the pressure plate (211) by transmitting thereto the rotational force from the rotary output shaft (23), the link mechanism (24) including a plurality of links (241, 242, 243) coupled to each other and an adjustment mechanism (244) configured to adjust a length of at least one (242) of the plurality of links (241, 242, 243), the method comprising:
controlling the clutch motor (22) to change a position of the pressure plate (211) when the straddled vehicle (1) starts traveling or when the gear stage is changed among the plurality of gear stages in the transmission device (31),
performing inspection drive to drive the clutch motor (22) in a direction toward a position corresponding to a movable limit position beyond the connection position in the clutch (21) until rotation of the clutch motor (22) is stopped, thereby causing the pressure plate (211) to move through the link mechanism (24) including the adjustment mechanism (244), after the straddled vehicle (1) is turned on and before the straddled vehicle (1) starts traveling, and **characterised in**
restricting the straddled vehicle (1) from traveling if the positional signal outputted from the potentiometer (25) when the rotation of the clutch motor (22) is stopped indicates a position outside a range corresponding to the movable limit position.

7. The method for controlling a straddled vehicle (1) according to claim 6, further comprising:
driving the clutch motor (22) to a position corresponding to the connection position in the clutch (21) when the straddled vehicle (1) is turned off, and omitting the inspection drive if the positional signal from the potentiometer (25) indicates a position within a range corresponding to the connection position in the clutch (21) after the straddled vehicle (1) is turned on and before the inspection drive is performed.

8. The method for controlling a straddled vehicle (1) according to claim 6 or 7, further comprising:
driving the clutch motor (22) to move in the direction toward the position corresponding to the movable limit position at a lower speed in the inspection drive than a speed when driving the clutch motor (22) in the direction toward the position corresponding to the connection position when the gear stage is changed.

9. The method for controlling a straddled vehicle (1) according to any one of claims 6 to 8, further comprising:
restricting the engine (10) from starting if the positional signal outputted from the potentiometer (25) when the rotation of the clutch motor (22) is stopped indicates a position outside the range corresponding to the movable limit position, after the inspection drive of the clutch motor (22), which is performed after the straddled vehicle (1) is turned on and before the engine (10) is started.

10. The method for controlling a straddled vehicle (1) according to any one of claims 6 to 9, further comprising:
detecting that the rotation has been stopped based on an increase in current being supplied to the clutch motor (22), a decrease in amount of change in the positional signal from the potentiometer (25), or a deviation of the positional signal from the potentiometer (25) from a control target angle for the clutch motor (22).

## Patentansprüche

1. Ein Spreizsitzfahrzeug (1), das umfasst:
einen Motor (10);
eine Getriebevorrichtung (31) mit einer Mehrzahl von Gangstufen;
eine Kupplung (21), die so konfiguriert ist, dass sie die Kraftübertragung zwischen dem Motor (10) und der Getriebevorrichtung (31) entsprechend einer Position einer Druckplatte (211) trennt und verbindet, die so konfiguriert ist, dass sie sich zwischen einer Verbindungsposition und einer Trennposition bewegt;
einen Kupplungsmotor (22);
eine rotierende Ausgangswelle (23), die so konfiguriert ist, dass sie die Drehkraft des Kupplungsmotors (22) abgibt;
ein Potentiometer (25), das so konfiguriert ist, dass es ein Positionssignal ausgibt, das eine Drehposition der drehbaren Ausgangswelle (23) angibt;
ein Lenkermechanismus (24), der so konfiguriert ist, dass er die Druckplatte (211) bewegt, indem er die Drehkraft von der rotierenden Ausgangswelle (23) auf diese überträgt, wobei der Lenkermechanismus (24) eine Mehrzahl von Lenkern (241, 242, 243), die miteinander gekoppelt sind und einen Einstellmechanismus (244) enthält, der so konfiguriert ist, dass er die Länge von zumindest einem (242) der Mehrzahl der Lenker (241, 242, 243) einstellt, und
eine Steuervorrichtung (40), die so konfiguriert ist, dass sie
den Kupplungsmotor (22) steuert, um eine Position der Druckplatte (211) zu ändern, wenn das Spreizsitzfahrzeug (1) zu fahren beginnt oder wenn die Gangstufe aus der Mehrzahl der Gangstufen in der Getriebevorrichtung (31) gewechselt wird,
einen Inspektionsantrieb ausführt, um den Kupplungsmotor (22) in Richtung einer Position anzutreiben, die einer bewegbaren Grenzposition jenseits der Verbindungsposition in der Kupplung (21) entspricht, bis die Drehung des Kupplungsmotors (22) gestoppt ist, wodurch die Druckplatte (211) durch den Lenkermechanismus (24) einschließlich des Einstellmechanismus (244) bewegt wird, nachdem das Spreizsitzfahrzeug (1) eingeschaltet wurde und bevor das Spreizsitzfahrzeug (1) losfährt, und **dadurch gekennzeichnet, dass** die Steuervorrichtung (40) ferner so konfiguriert ist, um
das Spreizsitzfahrzeug (1) am Fahren zu hindern, wenn das vom Potentiometer (25) ausgegebene Positionssignal bei angehaltener Drehung des Kupplungsmotors (22) eine Position außerhalb eines Bereichs anzeigt, der der bewegbaren Grenzposition entspricht.

2. Das Spreizsitzfahrzeug (1) gemäß Anspruch 1, wobei die Steuervorrichtung (40) so konfiguriert ist, dass sie den Kupplungsmotor (22) in eine Position antreibt, die der Verbindungsposition in der Kupplung (21) entspricht, wenn das Spreizsitzfahrzeug (1) ausgeschaltet wird, und so konfiguriert ist, dass sie den Inspektionsantrieb auslässt, wenn das Positionssignal vom Potentiometer (25) eine Position innerhalb eines Bereichs anzeigt, der der Verbindungsposition in der Kupplung (21) entspricht, nachdem das Spreizsitzfahrzeug (1) eingeschaltet wurde und bevor der Inspektionsantrieb durchgeführt wird.

3. Das Spreizsitzfahrzeug (1) gemäß Anspruch 1 oder 2, wobei die Steuervorrichtung (40) so konfiguriert ist, dass sie den Kupplungsmotor (22) antreibt, um sich in Richtung der Position zu bewegen, die der bewegbaren Grenzposition entspricht, und zwar mit einer geringeren Geschwindigkeit im Inspektionsantrieb als einer Geschwindigkeit, mit der die Steuervorrichtung (40) konfiguriert ist den Kupplungsmotor (22) in Richtung der Position anzutreiben, die der Verbindungsposition entspricht, wenn die Gangstufe gewechselt wird.

4. Das Spreizsitzfahrzeug (1) gemäß irgendeinem der Ansprüche 1 bis 3, wobei die Steuervorrichtung (40) so konfiguriert ist, dass sie den Start des Motors (10) verhindert, wenn das vom Potentiometer (25) ausgegebene Positionssignal bei angehaltener Drehung des Kupplungsmotors (22) eine Position außerhalb des Bereichs anzeigt, der der bewegbaren Grenzposition entspricht, nachdem der Inspektionsantrieb des Kupplungsmotors (22) durchgeführt wird, die nach dem Einschalten des Spreizsitzfahrzeugs (1) und vor dem Starten des Motors (10) durchgeführt wird.

5. Das Spreizsitzfahrzeug (1) gemäß irgendeinem der Ansprüche 1 bis 4, wobei die Steuervorrichtung (40) so konfiguriert ist, um zu erfassen , dass die Drehung des Kupplungsmotors gestoppt wurde, auf der Grundlage einer Zunahme des dem Kupplungsmotor (22) zugeführten Stroms, einer Abnahme der Änderungsgröße des Positionssignals vom Potentiometer (25) oder einer Abweichung des Positionssignals vom Potentiometer (25) von einem Steuerzielwinkel für den Kupplungsmotor (22).

6. Ein Verfahren zum Steuern eines Spreizsitzfahrzeugs (1) mit einem Motor (10), einer Getriebevorrichtung (31) mit einer Mehrzahl von Gangstufen, einer Kupplung (21), die so konfiguriert ist, dass sie die Kraftübertragung zwischen dem Motor (10) und der Getriebevorrichtung (31) entsprechend einer Position einer Druckplatte (211), die sich zwischen einer Verbindungsposition und einer Trennposition bewegt, trennt und verbindet, einem Kupplungsmotor (22), eine Ausgangswelle (23), die so konfiguriert ist, dass sie die Drehkraft des Kupplungsmotors (22) ausgibt, ein Potentiometer (25), das so konfiguriert ist, dass es ein Positionssignal ausgibt, das eine Drehposition der Ausgangswelle (23) anzeigt, und einen Lenkermechanismus (24), der so konfiguriert ist, dass er die Druckplatte (211) bewegt, indem er die Drehkraft von der Ausgangswelle (23) auf sie zu übertragen, wobei der Lenkermechanismus (24) eine Mehrzahl miteinander verbundener Lenker (241, 242, 243) und einen Einstellmechanismus (244) enthält, der so konfiguriert ist, dass er die Länge von zumindest einem (242) der Mehrzahl der Lenker (241, 242, 243) einstellt,
wobei das Verfahren umfasst:
Steuern des Kupplungsmotors (22), um eine Position der Druckplatte (211) zu ändern, wenn das Spreizsitzfahrzeug (1) zu fahren beginnt oder wenn die Gangstufe unter der Mehrzahl der Gangstufen in der Getriebevorrichtung (31) gewechselt wird,
Durchführen eines Inspektionsantriebs, um den Kupplungsmotor (22) in Richtung einer Position anzutreiben, die einer bewegbaren Grenzposition jenseits der Verbindungsposition in der Kupplung (21) entspricht, bis die Drehung des Kupplungsmotors (22) gestoppt wird, wodurch die Druckplatte (211) durch den Lenkermechanismus (24), der den Einstellmechanismus (244) enthält, bewegt wird, nachdem das Spreizsitzfahrzeug (1) eingeschaltet wurde und bevor das Spreizsitzfahrzeug (1) losfährt, und **gekennzeichnet durch**
das Verhindern, dass das Spreizsitzfahrzeug (1) losfährt, wenn das Positionssignal, das vom Potentiometer (25) ausgegeben wird, wenn die Drehung des Kupplungsmotors (22) angehalten wird, eine Position außerhalb eines Bereichs anzeigt, der der bewegbaren Grenzposition entspricht.

7. Das Verfahren zum Steuern eines Spreizsitzfahrzeugs (1) gemäß Anspruch 6, das ferner umfass
Antreiben des Kupplungsmotors (22) in eine Position, die der Verbindungsposition in der Kupplung (21) entspricht, wenn das Spreizsitzfahrzeug (1) ausgeschaltet wird, und das Auslassen des Inspektionsantriebs, wenn das Positionssignal vom Potentiometer (25) eine Position innerhalb eines Bereichs anzeigt, der der Verbindungsposition in der Kupplung (21) entspricht, nachdem das Spreizsitzfahrzeug (1) eingeschaltet wurde und bevor der Inspektionsantrieb durchgeführt wird.

8. Das Verfahren zum Steuern eines Spreizsitzfahrzeugs (1) gemäß Anspruch 6 oder 7, das ferner umfasst:
Antreiben des Kupplungsmotors (22), um sich in Richtung der Position zu bewegen, die der bewegbaren Grenzposition entspricht, mit einer geringeren Geschwindigkeit im Inspektionsantrieb als einer Geschwindigkeit, wenn der Kupplungsmotor (22) in Richtung der Position angetrieben wird, die der Verbindungsposition entspricht, wenn die Gangstufe gewechselt wird.

9. Das Verfahren zum Steuern eines Spreizsitzfahrzeugs (1) gemäß irgendeinem der Ansprüche 6 bis 8, das ferner umfasst:
Verhindern des Startens des Motors (10), wenn das von dem Potentiometer (25) ausgegebene Positionssignal, wenn die Drehung des Kupplungsmotors (22) gestoppt ist, eine Position außerhalb des Bereichs anzeigt, der der bewegbaren Grenzposition entspricht, nach dem Inspektionsantrieb des Kupplungsmotors (22), der nach dem Einschalten des Spreizsitzfahrzeugs (1) und vor dem Starten des Motors (10) durchgeführt wird.

10. Das Verfahren zum Steuern eines Spreizsitzfahrzeugs (1) gemäß irgendeinem der Ansprüche 6 bis 9, das ferner umfasst:
Erfassen, dass die Drehung gestoppt wurde, basierend auf einer Zunahme des dem Kupplungsmotor (22) zugeführten Stroms, einer Abnahme der Änderungsgröße des Positionssignals vom Potentiometer (25) oder einer Abweichung des Positionssignals vom Potentiometer (25) von einem Steuerzielwinkel für den Kupplungsmotor (22).

## Revendications

1. Véhicule à enfourcher (1) comprenant :
un moteur (10) ;
un dispositif de transmission (31) ayant une pluralité de rapports de boîte ;
un embrayage (21) configuré pour déconnecter et connecter une transmission de puissance entre le moteur (10) et le dispositif de transmission (31) en fonction d'une position d'une plaque de pression (211) qui est configurée pour se déplacer entre une position de connexion et une position de déconnexion ;
un moteur d'embrayage (22) ;
un arbre de sortie rotatif (23) configuré pour délivrer en sortie une force rotationnelle du moteur d'embrayage (22) ;
un potentiomètre (25) configuré pour délivrer en sortie un signal de position indiquant une position rotationnelle de l'arbre de sortie rotatif (23) ;
un mécanisme de liaisons (24) configuré pour déplacer la plaque de pression (211) en lui transmettant la force rotationnelle de l'arbre de sortie rotatif (23), le mécanisme de liaisons (24) comportant une pluralité de liaisons (241, 242, 243) couplées entre elles et un mécanisme d'ajustement (244) configuré pour ajuster une longueur d'au moins une (242) de la pluralité de liaisons (241, 242, 243) ; et
un dispositif de commande (40) configuré pour
commander le moteur d'embrayage (22) pour qu'il change une position de la plaque de pression (211) lorsque le véhicule à enfourcher (1) commence à se déplacer ou lorsque le rapport de boîte est changé parmi la pluralité de rapports de boîte dans le dispositif de transmission (31),
effectuer un entraînement d'inspection pour entraîner le moteur d'embrayage (22) dans une direction vers une position correspondant à une position limite mobile au-delà de la position de connexion dans l'embrayage (21) jusqu'à ce qu'une rotation du moteur d'embrayage (22) soit stoppée, amenant ainsi la plaque de pression (211) à se déplacer par l'intermédiaire du mécanisme de liaisons (24) comportant le mécanisme d'ajustement (244), après que le véhicule à enfourcher (1) est mis en marche et avant que le véhicule à enfourcher (1) ne commence à se déplacer, et **caractérisé en ce que** le dispositif de commande est en outre configuré pour
empêcher le déplacement du véhicule à enfourcher (1) si le signal de position délivré en sortie par le potentiomètre (25) lorsque la rotation du moteur d'embrayage (22) est stoppée indique une position en dehors d'une plage correspondant à la position limite mobile.

2. Véhicule à enfourcher (1) selon la revendication 1, dans lequel le dispositif de commande (40) est configuré pour entraîner le moteur d'embrayage (22) vers une position correspondant à la position de connexion dans l'embrayage (21) lorsque le véhicule à enfourcher (1) est éteint, et configuré pour faire abstraction de l'entraînement d'inspection si le signal de position provenant du potentiomètre (25) indique une position dans une plage correspondant à la position de connexion dans l'embrayage (21) après que le véhicule à enfourcher (1) est mis en marche et avant que l'entraînement d'inspection ne soit effectué.

3. Véhicule à enfourcher (1) selon la revendication 1 ou 2, dans lequel le dispositif de commande (40) est configuré pour entraîner le moteur d'embrayage (22) pour qu'il se déplace dans la direction vers la position correspondant à la position limite mobile à une vitesse inférieure lors de l'entraînement d'inspection à une vitesse à laquelle est configuré le dispositif de commande (40) pour entraîner le moteur d'embrayage (22) dans la direction vers la position correspondant à la position de connexion lorsque le rapport de boîte est changé.

4. Véhicule à enfourcher (1) selon l'une quelconque des revendications 1 à 3, dans lequel le dispositif de commande (40) est configuré pour empêcher le démarrage du moteur (10) si le signal de position délivré en sortie par le potentiomètre (25) lorsque la rotation du moteur d'embrayage (22) est stoppée indique une position en dehors de la plage correspondant à la position limite mobile, après l'entraînement d'inspection du moteur d'embrayage (22), qui est effectué après que le véhicule à enfourcher (1) est mis en marche et avant que le moteur (10) ne soit démarré.

5. Véhicule à enfourcher (1) selon l'une quelconque des revendications 1 à 4, dans lequel le dispositif de commande (40) est configuré pour détecter que la rotation du moteur d'embrayage (22) a été stoppée sur la base d'une augmentation de courant fourni au moteur d'embrayage (22), d'une diminution de grandeur de changement du signal de position provenant du potentiomètre (25), ou d'un écart du signal de position provenant du potentiomètre (25) par rapport à un angle cible de commande pour le moteur d'embrayage (22).

6. Procédé de commande d'un véhicule à enfourcher (1) ayant un moteur (10), un dispositif de transmission (31) ayant une pluralité de rapports de boîte, un embrayage (21) configuré pour déconnecter et connecter une transmission de puissance entre le moteur (10) et le dispositif de transmission (31) en fonction d'une position d'une plaque de pression (211) qui se déplace entre une position de connexion et une position de déconnexion, un moteur d'embrayage (22), un arbre de sortie rotatif (23) configuré pour délivrer en sortie une force rotationnelle du moteur d'embrayage (22), un potentiomètre (25) configuré pour délivrer en sortie un signal de position indiquant une position rotationnelle de l'arbre de sortie rotatif (23), et un mécanisme de liaisons (24) configuré pour déplacer la plaque de pression (211) en lui transmettant la force rotationnelle de l'arbre de sortie rotatif (23), le mécanisme de liaisons (24) comportant une pluralité de liaisons (241, 242, 243) couplées entre elles et un mécanisme d'ajustement (244) configuré pour ajuster une longueur d'au moins une (242) de la pluralité de liaisons (241, 242, 243), le procédé comprenant les étapes consistant à :
commander le moteur d'embrayage (22) pour changer une position de la plaque de pression (211) lorsque le véhicule à enfourcher (1) commence à se déplacer ou lorsque le rapport de boîte est changé parmi la pluralité de rapports de boîte dans le dispositif de transmission (31),
effectuer un entraînement d'inspection pour entraîner le moteur d'embrayage (22) dans une direction vers une position correspondant à une position limite mobile au-delà de la position de connexion dans l'embrayage (21) jusqu'à ce qu'une rotation du moteur d'embrayage (22) soit stoppée, amenant ainsi la plaque de pression (211) à se déplacer par l'intermédiaire du mécanisme de liaisons (24) comportant le mécanisme d'ajustement (244), après que le véhicule à enfourcher (1) est mis en marche et avant que le véhicule à enfourcher (1) ne commence à se déplacer, et **caractérisé en ce que**
le déplacement du véhicule à enfourcher (1) est empêché si le signal de position délivré en sortie par le potentiomètre (25) lorsque la rotation du moteur d'embrayage (22) est stoppée indique une position en dehors d'une plage correspondant à la position limite mobile.

7. Procédé de commande d'un véhicule à enfourcher (1) selon la revendication 6, comprenant en outre :
l'entraînement du moteur d'embrayage (22) vers une position correspondant à la position de connexion dans l'embrayage (21) lorsque le véhicule à enfourcher (1) est éteint, et l'abstraction de l'entraînement d'inspection si le signal de position provenant du potentiomètre (25) indique une position dans une plage correspondant à la position de connexion dans l'embrayage (21) après que le véhicule à enfourcher (1) est mis en marche et avant que l'entraînement d'inspection ne soit effectué.

8. Procédé de commande d'un véhicule à enfourcher (1) selon la revendication 6 ou 7, comprenant en outre :
l'entraînement du moteur d'embrayage (22) pour qu'il se déplace dans la direction vers la position correspondant à la position limite mobile à une vitesse inférieure lors de l'entraînement d'inspection à une vitesse lors de l'entraînement du moteur d'embrayage (22) dans la direction vers la position correspondant à la position de connexion lorsque le rapport de boîte est changé.

9. Procédé de commande d'un véhicule à enfourcher (1) selon l'une quelconque des revendications 6 à 8, comprenant en outre :
le fait d'empêcher le démarrage du moteur (10) si le signal de position délivré en sortie par le potentiomètre (25) lorsque la rotation du moteur d'embrayage (22) est stoppée indique une position en dehors de la plage correspondant à la position limite mobile, après l'entraînement d'inspection du moteur d'embrayage (22), qui est effectué après que le véhicule à enfourcher (1) est mis en marche et avant que le moteur (10) ne soit démarré.

10. Procédé de commande d'un véhicule à enfourcher (1) selon l'une quelconque des revendications 6 à 9, comprenant en outre :
la détection que la rotation a été stoppée sur la base d'une augmentation de courant fourni au moteur d'embrayage (22), d'une diminution de grandeur de changement du signal de position provenant du potentiomètre (25), ou d'un écart du signal de position provenant du potentiomètre (25) par rapport à un angle cible de commande pour le moteur d'embrayage (22).
